# EUROPÄISCHE PATENTSCHRIFT

(11) **EP 4 217 685 B1**
(45) Veröffentlichungstag und Bekanntmachung des Hinweises auf die Patenterteilung: **17.06.2026**
(21) Anmeldenummer: 21777463.7
(22) Anmeldetag: 10.09.2021
(51) Int. Cl.: G01F 1/66, F04B 49/06, F04B 23/04

(54) **HOCHDRUCKANLAGE, VERFAHREN ZUR ERMITTLUNG EINER DURCHFLUSSREGELGRÖSSE EINES DURCH EINEN HOCHDRUCKSEITIGEN HOCHDRUCKPUMPENAUSLASS EINER HOCHDRUCKPUMPE STRÖMENDEN FLUIDSTROMES, UND VERWENDUNG EINES ULTRASCHALLMESSGERÄTES ZUR ERMITTLUNG EINES DURCHFLUSSWERTES DURCH EIN DICKWANDIGES ROHR EINES HOCHDRUCKSEITIGEN HOCHDRUCKPUMPENAUSLASS EINER HOCHDRUCKPUMPE STRÖMENDEN FLUIDSTROMES**
HIGH PRESSURE INSTALLATION, METHOD FOR DETERMINING A FLOW CONTROL VARIABLE OF A FLUID FLOW FLOWING THROUGH A HIGH-PRESSURE OUTLET OF A HIGH-PRESSURE PUMP, AND USE OF AN ULTRASONIC MEASURING DEVICE FOR DETERMINING A FLOW VALUE OF A FLUID FLOW FLOWING THROUGH A THICK-WALLED PIPE OF A HIGH-PRESSURE OUTLET OF A HIGH-PRESSURE PUMP
INSTALLATION HAUTE PRESSION, PROCÉDÉ DE DÉTERMINATION D'UNE GRANDEUR DE RÉGULATION DU DÉBIT D'UN FLUX DE FLUIDE S'ÉCOULANT À TRAVERS UNE SORTIE DE POMPE HAUTE PRESSION, ET UTILISATION D'UN APPAREIL DE MESURE À ULTRASONS POUR DÉTERMINER UNE VALEUR DE DÉBIT À TRAVERS UN TUBE À PAROI ÉPAISSE D'UNE SORTIE DE POMPE HAUTE PRESSION

(30) Priorität: 23.09.2020 DE 102020211898; 23.09.2020 BE 202005652
(43) Veröffentlichungstag der Anmeldung: 02.08.2023
(73) Patentinhaber: Uhde High Pressure Technologies GmbH, 58093 Hagen (DE); thyssenkrupp AG, 45143 Essen (DE)
(72) Erfinder: HILLER, Waldemar, 58642 Iserlohn (DE); WERTH, Holger, 59423 Unna (DE); NÜNNERICH, Peter, 57080 Siegen (DE); KARPINSKI, Andrzej, 58099 Hagen (DE)
(74) Vertreter: thyssenkrupp Intellectual Property GmbH
(86) Internationale Anmeldenummer: PCT/EP2021/074950
(87) Internationale Veröffentlichungsnummer: WO 2022/063607

(56) Entgegenhaltungen:
- WO-A1-2014/009016
- WO-A1-2020/053572
- DE-A1- 102005 032 636
- DE-A1- 102016 009 179
- DE-A1- 102017 002 297
- DE-A1- 102018 129 220
- US-A1- 2017 260 820
- PARKER HANNIFIN GMBH: "EO-Rohre f�r Fitting-& Flanschsysteme", 1 October 2018 (2018-10-01), XP093146474, Retrieved from the Internet <URL:https://www.parker.com/content/dam/Parker-com/Literature/HPCE/New/CAT-4041-2-DE.pdf> [retrieved on 20240327]
- HAGEDORN M ET AL: "Praezisrohre fuer Hochdruck-Dieseleinspritzleitungen", MTZ - MOTORTECHNISCHE ZEITSCHRIFT, SPRINGER, vol. 69, no. 3, 1 March 2008 (2008-03-01), pages 200 - 205, XP001515213, ISSN: 0024-8525

## Beschreibung

Die vorliegende Erfindung betrifft ein Verfahren sowie eine Hochdruckanlange zur Ermittlung einer Durchflussregelgröße eines durch einen hochdruckseitigen Hochdruckpumpenauslass einer Hochdruckpumpe strömenden Fluidstromes, insbesondere eines durch eine mit dem hochdruckseitigen Hochdruckpumpenauslass einer Hochdruckpumpe verbundene Hochdruckverrohrung (Hochdruckrohr) strömenden Fluidstromes. Ferner betrifft die Erfindung eine Verwendung eines Ultraschallmessgerätes zur Ermittlung einer Durchflussregelgröße eines durch ein dickwandiges Rohr eines hochdruckseitigen Hochdruckpumpenauslasses einer Hochdruckpumpe strömenden Fluidstromes.

### STAND DER TECHNIK

Anlagen, wie beispielsweise Chemieanlagen, weisen ein komplexes Zusammenspiel von Stoff- und Energieströmen auf, welche, insbesondere zur Sicherstellung der Produktqualität, der Betriebssicherheit sowie auch des störungsfreien Betriebes der Anlage permanent überwacht werden müssen. Es ist grundlegend bekannt, dass insbesondere an die Messeinrichtungen in Hochdruckanlagen, aufgrund der vorherrschenden Betriebsbedingungen, hohe Anforderungen gestellt werden. Die häufig eingesetzten und hinsichtlich deren Temperatur, Druck und/oder Durchflussgeschwindigkeit zu überwachenden organischen und anorganischen, toxischen und korrosiven Medien, welche in den Anlagen zum Einsatz gelangen, können zum Verschleißen der Messgeräte und folglich zu deren Messungenauigkeit führen. Konventionell eingesetzte Instrumente, wie Blenden und andere Differenzdruckmesser, magnetischinduktive Durchflussmesser, Wirbelzähler und Coriolismesser erfordern eine häufige Wartung, die mit Produktionsunterbrechungen einhergehen. Darüber hinaus bewirken sie einen Druckverlust in der Leitung. Beides vermindert die Verfügbarkeit der Anlage und ihre Profitabilität.

Insbesondere bei Hochdruckanlagen z. B. Hochdruckanlagen zur Polymerisation von Ethylen (Ethen) oder Propylen (Propen) taucht aktuell immer wieder die Schwierigkeit auf genaue und aussagekräftige Messergebnisse zu erhalten. Dies begründet sich zum einen darin, dass insbesondere bei Hochdruckanlagen zur Polymerisation oder bei der Herstellung von Ethylen-Copolymeren die zu messenden Stoffe selbst die Schwierigkeit darstellen, da deren Durchflussmenge (Volumenstrom bzw. Massenstrom) sehr gering ist und lediglich nur wenige Liter pro Stunde beträgt. Zudem bedingen Hochdruckanlangen auch eine Stoffdichteänderung aufgrund des vorherrschenden hohen Druckes, durch welche die Ausbreitungsgeschwindigkeit des Schalls im Medium beträchtlich geändert wird. Die in den Hochdruckanlagen zu überwachenden Fluide werden bekannter Weise in sogenannten Hochdruckpumpen (z. B. Hochdruckübersetzern, Phased-Fow-Pumpen, Kurbeltriebpumpen) auf den erforderlichen Druck komprimiert, wodurch als Nachfolgeeffekt eine Druckpulsation entsteht. Dieses pulsierende Signal des gepumpten Mediums (Fluides) führt zu unerwünschten Ungenauigkeiten im Messergebnis. Zudem verursachen diese Druckänderungen ebenfalls Änderungen in der Geometrie der Hochdruck-Leitungen der Hochdruckanlage. Insbesondere die zu verwendeten Hochdruckrohre, welche einen geringen Innendurchmesser und eine entsprechend große Wanddicke aufweisen, erschweren die Messung der Durchflussmenge beispielsweise an Initiator (Peroxide) und Comonomeren erheblich. Weiterhin ist die Ausbreitungsgeschwindigkeit des Schalls auch von den Spannungszuständen im Rohrwerkstoff abhängig, d. h. diese ändert sich mit der Druckbeaufschlagung.

Grundsätzlich ist es bekannt, eingriffsfreie Messmittel, wie beispielsweise ein Clamp-on Ultraschallmessgerät, insbesondere bei Niederdruckanlagen zu verwenden, um wie oben genannt, eine Messung mittels eines wartungsarmen und verschleißarmen Messmittels zu ermöglichen. Das Clamp-on Ultraschallmessgerät wird von außen auf einen Teil der Anlage, wie einem Rohrstück eines Rohrleitungssystems, angeordnet und misst die Geschwindigkeit von strömenden Flüssigkeiten oder Gasen (Fluid) mittels des allgemein bekannten Ultraschall-Laufzeitdifferenzverfahrens. Das Ultraschall-Laufzeitdifferenzverfahren ist ein technisches Verfahren und dient zur Bestimmung von Laufzeitdifferenzen zwischen Ultraschallwellen, die ein Fluid gegenläufig durchlaufen. Laufzeitdifferenzen entstehen dabei aufgrund der Ablenkung der mechanisch gekoppelten Ultraschallwellen, die durch eine Bewegung des Fluides entstehen. Folglich dienen die Laufzeitdifferenzen als Basis zur Ermittlung der Fluidgeschwindigkeit, mit deren Hilfe eine Aussage über den Volumenfluss und Massenfluss erst ermöglicht wird (Quelle: Flexim GmbH).

Diese Ultraschallmesssysteme kommen in aktuell laufenden Hochdruckanlagen lediglich derart zur Anwendung, dass insbesondere in Hochdruckanlagen zur Polymerisation oder bei der Herstellung von Ethylen- Copolymeren der in den Reaktor einzubringende Initiator bzw. das Comonomer auf der Niederdruckseite, insbesondere der Saugseite der Hochdruckpumpe gemessen wird. Oftmals findet auch nur lediglich eine Überwachung der Hubzahl der Hochdruckpumpe statt, um ein Messergebnis zu erhalten. Dieses Messergebnis kann jedoch nur vage bzw. annähernd den wahren Volumenstrom des in den Reaktor fließenden Fluides aufzeigen. Auch wird oftmals lediglich das Endprodukt selbst geprüft, um feststellen zu können, ob die in den Reaktor dosierte Menge an Fluid (Initiator oder Comonomer) optimal war. Wird dann eine nicht gewollte Abweichung zum SOLL-Zustand festgestellt, ist im schlechtesten Fall eine Vernichtung der gesamten Produktcharge erforderlich, was wiederum mit hohen Produktionskosten verbunden ist.

Im Anwendungsfall von beispielsweise Wasserstrahl-Schneidanlagen oder Hochdruck-Pastorisierungsanlagen, bei welchen Hochdruckpumpen zum Einsatz gelangen, die einen Wasserdruck bis zu 6000bar erzeugen können, erfolgt die Messung des strömenden Fluides in bekannter Weise durch das hochdruckseitige Auslitern der Hochdruckpumpen mit den in den Hochdruck-Leitungen fest installierten Turbinen-Durchflussmessern bis jedoch lediglich 4000bar.

Es sind eine Vielzahl von Anwendungen eines Ultraschallmessgerätes, insbesondere bei Niederdruckanlagen oder auch Modifikationen von Ultraschallmessgeräten, wie nachfolgend aufgeführt, bekannt. In der DE10 2017 002 297 A1 ist ein Kreiselpumpenaggregat mit einem Volumenstromsensor beschrieben. Das elektromotorisch angetriebene Kreiselpumpenaggregat weist ein Pumpengehäuse und einen Volumenstromsensor zur Bereitstellung eines Volumenstromwerts, der in oder an dem Pumpengehäuse montiert ist auf, und ist mit einer Pumpenelektronik zur Regelung des Kreiselpumpenaggregats in Abhängigkeit des Volumenstromwerts verbunden. In der WO2018/072926A1 ist die Verwendung eines Clamp-On-Ultraschallsensor für ein Ultraschall-Durchflussmessgerät beschrieben. Der Clamp-On-Ultraschallsensor ist dazu eingerichtet, in einer Messrohrwandung eines Messrohrs des Ultraschall-Durchflussmessgeräts mindestens eine Lamb-Wellen-Mode zu erzeugen. Um einen Einsatz des Clamp-On-Ultraschallsensors an verschiedenen Messrohrtypen zu gewährleisten, weist der Clamp-On-Ultraschallsensor ein austauschbares Koppelelement auf, welches an einen jeweiligen Messrohrtyp angepasst ist. In der US7,624651B2 ist eine Vorrichtung zur Dämpfung einer unerwünschten Komponente eines Ultraschallsignals beschrieben. Die Vorrichtung weist einen an einem Rohr befestigten Sensor auf, welcher einen Transmitter und einen Empfänger umfasst. Das gesendete Ultraschallsignal enthält eine strukturelle Komponente, die sich durch das Rohr ausbreitet und eine Flüssigkeitskomponente, die sich durch eine Strömung in der Leitung ausbreitet. Die Vorrichtung enthält eine Dämpfungsstruktur, welche die strukturelle Komponente des Ultraschallsignals dämpft und aus einem am Rohr befestigten Gehäuse besteht, um die Ultraschall-Schwingungseigenschaften zu modifizieren.

In der CN100578191C ist eine Messung einer rheologischen Eigenschaft eines Hochpolymersystems beschrieben, wobei ein Tester zur Prüfung der rheologischen Eigenschaften von überkritischen Fluiden und der Ultraschallbestrahlung auf hochpolymere Systeme und den Einfluss der Eigenschaften auf das Formprodukt verwendet wird. In der CN 101074885B ist ein Durchflussmesser zum Senden/Empfangen beschrieben, welcher die Zustandsänderungen eines Fluides zur Messung der Ausbreitungszeit verwendet. Die DE 10 2005 032636 A1 offenbart ein Verfahren zur Beurteilung einer Funktionsfähigkeit eines Hochdruck-Kraftstoffversorgungssystems eines Kraftfahrzeugs auf der Basis eines in dem Kraftstoffversorgungssystem erfassten Kraftstoffstroms mittels einer Ultraschall-Durchflussmessung.

### OFFENBARUNG DER ERFINDUNG

Es ist daher die Aufgabe der vorliegenden Erfindung, die voranstehend beschriebenen Nachteile bei der Messung einer Durchflussgeschwindigkeit eines strömenden Fluides einer Hochdruckanlage zumindest teilweise zu beheben. Insbesondere ist es die Aufgabe der vorliegenden Erfindung ein Verfahren und eine Hochdruckanlage zur Ermittlung einer Durchflussregelgröße zu schaffen, die auf eine einfache und kostengünstige Art und Weise zum einen ein genaues Messergebnis des Volumenstromes (und/oder Massenstromes) des gemessenen Fluides, unabhängig von den oben genannten Schwierigkeiten beim Messverfahren zur Messung eines Fluidstromes in Hochdruckanlagen sowie die Ermittlung eines Wertes einer Durchflussregelgröße zur Regelung des durchfließenden Fluidstromes ermöglichen.

Die voranstehende Aufgabe wird gelöst durch ein Verfahren zur Ermittlung einer Durchflussregelgröße eines durch einen hochdruckseitigen Hochdruckpumpenauslass einer Hochdruckpumpe strömenden Fluidstromes mit den Merkmalen des Anspruchs 9 sowie durch eine Hochdruckanlage mit den Merkmalen gemäß Anspruch 1.

Ferner wird die voranstehende Aufgabe gelöst durch die Verwendung eines Ultraschallmessgerätes zur Ermittlung einer Durchflussregelgröße eines durch ein dickwandiges Rohr eines hochdruckseitigen Hochdruckpumpenauslasses einer Hochdruckpumpe strömenden Fluidstromes mit den Merkmalen des Anspruches 15. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Hochdruckanlage, insbesondre in Zusammenhang mit der Verwendung des Ultraschallmessgerätes und jeweils umgekehrt, so dass bezüglich der Offenbarung zu den einzelnen Erfindungsaspekten stets wechselseitig Bezug genommen wird beziehungsweise werden kann. Außerdem kann das erfindungsgemäße Verfahren mit der erfindungsgemäßen Hochdruckanlage durchgeführt werden.

Gemäß einem ersten Aspekt der Erfindung dient das erfindungsgemäße Verfahren zur Ermittlung einer Durchflussregelgröße eines durch einen hochdruckseitigen Hochdruckpumpenauslass einer Hochdruckpumpe einer Hochdruckanlage gemäß dem weiter unten beschriebenen zweiten Aspekt der Erfindung strömenden Fluidstromes, aufweisend zumindest die folgenden Schritte:
- Messung der Durchflussgeschwindigkeit des durch ein Rohr (Hochdruckrohr, Hochdruckverrohrung) des hochdruckseitigen Hochdruckpumpenauslasses strömenden Fluidstromes mittels wenigstens einem Ultraschallmessgerät, insbesondere eines von außen angeordneten Ultraschallmessgerätes, zum Erhalt eines Messergebnisses der Durchflussgeschwindigkeit,
- Übertragung des Messergebnisses der Durchflussgeschwindigkeit an eine Auswerteeinheit, und
- Berechnung eines aktuellen Durchflusswertes sowie der Durchflussregelgröße aus dem Messergebnis der Durchflussgeschwindigkeit mittels der Auswerteeinheit.

Bei dem verwendeten Ultraschallmessgerät kann es sich beispielsweise um ein Clamp-on Ultraschallmessgerät handeln. Dieses Ultraschallmessgerät, welches beispielsweise mittels eines Ultraschall-Laufzeitdifferenzverfahrens arbeitet, bietet vorteilhaft eine einfache und schnelle sowie eingriffsfreie Montagemöglichkeit, da dieses Ultraschallmessgerät außen an dem Hochdruckpumpenauslass der verwendeten Hochdruckpumpe angeordnet wird/ist. Es ist auch denkbar, dass eine hybride Messmethodik bestehend aus dem Laufzeitdifferenzverfahren und einem Noise Trek Verfahren mittels des verwendeten Ultraschallmessgerätes zur Anwendung gelangt. Folglich ist das Ultraschallmessgerät als hybrides Messgerät auch zum Aussenden von entsprechenden Noise Trek Signalen fähig. In diesem Fall kann eine stabile Messung auch bei hohem Gas-und Feststoffanteil im Fluidstrom prozesssicher erfolgen. Eine konstruktive Modifikation des bestehenden Systems der Hochdruckanlage ist durch die Verwendung bzw. die Anbringung des Ultraschallmessgerätes nicht zwingend erforderlich. Vorteilhaft wäre es denkbar zumindest eine Einlaufstrecke vor der Messtrecke und/oder eine Auslaufstrecke nach der Messtrecke derart zu gestalten, dass sich der gemessene Fluidstrom vergleichmäßigt. Als Messtrecke wird dabei vorteilhaft der Abschnitt des Rohres, insbesondere des Hochdruckrohres am hochdruckseitigen Hochdruckpumpenauslass bezeichnet, an welcher das wenigstens eine Ultraschallmessgerät angeordnet ist. Es ist auch denkbar, dass zumindest zwei oder mehr Ultraschallmessgeräte, insbesondere eine Vielzahl an Ultraschallmessgeräten im Bereich der Messstrecke angeordnet und messtechnisch optimiert zueinander ausgerichtet sind. Der in der Hochdruckanlage erfolgende Prozess, wie beispielsweise die Polymerisation, wird von der Montage des Ultraschallmessgerätes sowie dessen Verwendung nicht beeinflusst. Des Weiteren bietet das verwendete Ultraschallmessgerät eine im Wesentlichen verschleißfreie Anwendung, da das Ultraschallmessgerät nicht mit den zu messenden und zu überwachenden Fluiden, welche teilweise auch toxisch sein können, in Kontakt kommt. Ebenfalls wird durch die Anwendung eines Ultraschallmessgerätes ein mögliches auftretendes Leckagerisiko minimiert, vorteilhaft sogar gänzlich vermieden. Dies ist insbesondere bei Hochdruckanlagen in explosionsgefährdeter Umgebung erforderlich, bei der die gesamte Messvorrichtung die Vorgaben zum Explosionsschutz erfüllen muss. Ebenfalls als vorteilhaft ist zu nennen, dass auch während des Einsatzes des Ultraschallmessgerätes kein zusätzlicher Druckverlust im Hochdruck-Leitungssystem zu verzeichnen ist.

Es ist zudem denkbar eine mehrpfadige Anordnung und/oder eine Reihenanordnung von Ultraschallmessgeräten zu ermöglichen, wodurch vorteilhaft die Messgenauigkeit weiter erhöht und eine Beeinflussung durch ein asymmetrisches Durchflussprofil minimiert werden kann. Genauer bedeutet dies, dass beispielsweise zwei oder mehr Ultraschallmessgeräte (innerhalb der Messstrecke) in Strömungsrichtung nacheinander an gleicher Umfangsposition des Rohres (Hochdruckrohres), insbesondere auf derselben Seite des Rohres angeordnet sind. Hierbei kann das von einem ersten Ultraschallmessgerät ausgesandte Signal an einer Innenwandung des Rohres reflektiert und von dem anderen benachbart angeordneten Ultraschallmessgerät empfangen werden, und vice versa. In diesem Fall spricht man von einem Reflexmodus, bei welchem die Anzahl der Schallwege gerade ist bzw. einer geraden Zahl entspricht. Der erste Schallweg ist folglich der Weg zwischen dem aussendenden Ultraschallmessgerät und der Innenwandung des Rohres, während der zweite Schallweg der Weg zwischen der Innenwandung des Rohres und dem empfangenen Ultraschallmessgerät ist. Alternativ oder zusätzlich ist es denkbar, dass zu jedem Ultraschallmessgerät ein auf der gegenüberliegenden Seite des Rohres (Hochdruckrohres) angeordnetes Ultraschallmessgerät ausgerichtet ist, um Signale zu empfangen bzw. Signale zu senden. Hierbei handelt es sich um einen Durchstrahlungsmodus, bei welchem die Anzahl der Schallwege ungerade ist bzw. einer ungeraden Zahl entspricht. Sendet das eine Ultraschallmessgerät folglich ein Signal durch das Rohr hindurch zu dessen im Wesentlichen gegenüberliegenden Ultraschallgerät handelt es sich hierbei um einen einzigen Schallweg. Wenn die Anzahl der Schallwege erhöht wird, nimmt auch die Genauigkeit der Messung zu, wobei jedoch gleichzeitig die Signaldämpfung steigt.

Die Durchflussregelgröße, welche im Rahmen der Erfindung auch als Durchflussregelwert bezeichnet werden kann, stellt einen Wert "x" dar. Dieser Wert ist "x" definiert die Abweichung zwischen einem IST-Wert, genauer dem gemessenen Durchflusswert, insbesondere der gemessenen Durchflussgeschwindigkeit und dem SOLL-Wert, genauer dem festgelegten erforderlichen Durchflusswert, insbesondere der erforderlichen Durchflussgeschwindigkeit über die Zeit "t". Dementsprechend ist "IST *x = SOLL". Genauer gesagt, wird mit der Ermittlung des Wertes "x", also der Durchflussregelgröße ein Wert ermittelt, der die Differenz zwischen dem gemessenen IST-Wert und dem erforderlichen SOLL-Wert ausgleicht. Der erforderliche SOLL-Wert, genauer der definierte bzw. festgelegte Durchflusswert ist vorteilhaft eine variierende Größe, welche je nach Anforderungen und Bedingungen der Hochdruckanlage verändert und angepasst werden kann. Die SOLL-Wert Vorgaben werden beispielsweise vom Hochdruckanlagenbetreiber festgelegt. Vorteilhaft sind die SOLL-Werte in einer Speichereinheit einer Auswerteeinheit hinterlegt und können für einzelne Betriebsmodi der Hochdruckanlage abgefragt bzw. abgerufen werden.

Das erfindungsgemäße Verfahren dient zur Messung von verwendeten Fluiden im Bereich der nachfolgend vorgestellten Hochdruck-Anwendungsgebiete.

Ein erstes Anwendungsgebiet ist die in einer Hochdruckanlage durchgeführte Polymerisation von Polyethylen. Bei diesem Prozess werden Drücke im Bereich von 1000 - 3500 bar erzeugt, bei welchen Initiatoren, wie Peroxide, in den Reaktor eingebracht werden. Hierbei ist es unter anderem ein Ziel die Menge des eingebrachten Initiators im Prozess in Hinblick auf die Produktionsmenge und die Anlagensicherheit stetig, insbesondere kontinuierlich, zu optimieren. Insbesondere erhöht eine unbeabsichtigte zu hohe Menge an Initiator das Risiko einer ungewollten schlagartigen Zersetzung des Ethylens, was wiederum zu einer starken exothermen Reaktion und folglich zu einem Abschalten der gesamten Hochdruckanlage führt. Daraus ergibt sich die Notwendigkeit einer genauen Messung des Initiatorstromes vor dem Reaktor, also direkt vor dem Einbringen des Initiatorstromes in den Reaktor. Mittels der vorliegenden Erfindung kann die eindosierte Initiator-Menge, insbesondere die eindosierte Peroxid-Menge sowie entsprechend auch die Initiator-Verluste hochdruckseitig, also an dem hochdruckseitigen Hochdruckpumpenauslass der Hochdruckpumpe gemessen werden. Initiator-Verluste entstehen beispielsweise durch Leckagen an verschlissenen Hochdruckdichtungen.

Ein anderes Anwendungsgebiet ist die Herstellung der Ethylen-Copolymere. Bei diesem Prozess werden Comonomere, wie Vinyl Acetate, Methyl-Acrylate oder Butyl-Acrylate mittels Hochdruckpumpen in den Reaktor dosiert. Das Einspritzen von Comonomeren zum Ethylen findet vor oder direkt im Reaktor statt. Da es sich bei Ethylen-Copolymeren um moderne, hochqualitative Kunststoffprodukte handelt, ist eine genaue Messung des Comonomerstromes vor dem Reaktor und auch dessen manuelle, halbautomatische, vorzugsweise vollautomatische dynamische Regulierung von immenser Bedeutung.

Ein weiteres Anwendungsgebiet sind die Wasserstrahl-Schneidanlagen oder Hochdruck-Pastorisierungsanlagen (HPP), bei welchen Hochdruckpumpen zum Einsatz gelangen, die Wasserdrücke bis 6000bar erzeugen können. Für diese Hochdruckanlagen ist eine eingriffsfreie Messung des Wasservolumens mit Drücken bis 6000bar für Abnahme- und Testzwecke sowie für die vorteilhaft automatische Wasserleckage- oder Düsenverstopfungserkennung während des Betriebes hochgradig relevant.

Die mittels des Ultraschallmessgerätes ermittelte bzw. gemessene Durchflussgeschwindigkeit des eingesetzten Fluides, welches insbesondere als mittlere Durchflussgeschwindigkeit verstanden wird und auch als Strömungsgeschwindigkeit bezeichnet werden kann, wird von dem Ultraschallmessgerät als Messergebnis an eine Auswerteeinheit übertragen. Diese Auswerteeinheit dient dazu einen aktuellen Durchflusswert, wie einen Volumenstrom (dV/dt bzw. V) zu berechnen. Vorteilhaft kann dieser Volumenstrom mittels der Fluiddichte in einen Massenstrom (dm/dt bzw. *ṁ*) umgerechnet werden. Der aktuelle Durchflusswert (Volumenstrom, Massenstrom) zeigt dem Bediener der Hochdruckanlage folglich den aktuell gemessenen IST-Zustand an. Das bedeutet, dass bei einer Abfrage der Auswerteeinheit bezüglich des aktuellen Durchflusswertes an einer Messstelle, wie hier dem hochdruckseitigen Hochdruckpumpenauslass, der Bediener den aktuell vorherrschenden Volumenstrom oder auch Massenstrom mitgeteilt bekommt. Dieser Wert kann sich kontinuierlich ändern, da die Messung der Durchflussgeschwindigkeit auch kontinuierlich, insbesondere dynamisch erfolgt. Zur Anzeige zumindest des aktuellen Durchflusswertes und auch der Durchflussregelgröße weist die Auswerteeinheit ein Anzeigeelement, wie einen Bildschirm, eine Anzeigetafel etc. auf. In Berücksichtigung des aktuellen/augenblicklichen Durchflusswertes erfolgt mittels der Auswerteeinheit die Ermittlung der Durchflussregelgröße. Die Durchflussregelgröße ist insbesondere ein Wert, der erforderlich ist, um einen zu erzielen/zu erreichen Durchflusswert zu erhalten. Das bedeutet, die Durchflussregelgröße bzw. der Durchflussregelwert ist ein Faktor, den es bedarf, um einen zu erzielender Volumenstrom oder Massenstrom, letztlich eine zu erzielende Durchflussgeschwindigkeit bzw. Strömungsgeschwindigkeit des Fluides, welches in den Reaktor eingebracht werden soll/muss, um das zu erwartende Ergebnis zu erhalten, zu ermöglichen. Der Durchflussregelwert bzw. die Durchflussregelgröße ist dementsprechend ein Regel- und Steuerwert, mit welchem angegeben (rückgerechnet) wird, inwieweit die Durchflussgeschwindigkeit des durch den hochdruckseitigen Hochdruckpumpenauslass strömenden Fluides erhöht bzw. reduziert werden muss, damit der aktuelle Durchflusswert innerhalb vorgegebener Grenzwerte verbleibt. Die vorgegebenen Grenzwerte werden in Hinblick auf das zu erzielende Endproduckt festgelegt und ermöglichen das Einbringen einer vorgegebenen und bedarfsgerechten Fluidmenge in den Reaktor.

Gemäß einer Ausführungsform erfolgt die Messung der Durchflussgeschwindigkeit sowie die Übertragung des Messergebnisses und die Berechnung des aktuellen Durchflusswertes sowie der Durchflussregelgröße dynamisch. Das bedeutet, dass das Ultraschallmessgerät kontinuierlich die Durchflussgeschwindigkeit erfasst/misst und diese folglich auch kontinuierlich an die Auswerteeinheit als Messergebnis überträgt. Diese Auswerteeinheit ermittelt dann wiederum kontinuierlich aus diesem Messergebnis den aktuellen Durchflusswert, insbesondere den aktuellen Volumenstrom oder Massenstrom sowie eine Durchflussregelgröße, insbesondere einen Durchflussregewert. Auch die daraufhin erfolgende Steuerung/Regelung der Hochdruckpumpe erfolgt dynamisch.

Gemäß einer weiteren Ausführungsform berechnet die Auswerteeinheit den aktuellen Durchflusswert mittels eines Gleichungsverfahrens, das bedeutet mittels eines mathematisches Berechnungsverfahren unter Verwendung einer Gleichung bzw. Formel und/oder die Durchflussregelgröße mittels eines Vergleich-Verfahrens. Als aktueller Durchflusswert wird beispielsweise der Volumenstrom als Produkt aus dem Rohrquerschnitt, auf welchem das Ultraschallmessgerät angeordnet ist, und der gemessenen Durchflussgeschwindigkeit (Strömungsgeschwindigkeit) berechnet. Einen aktuellen Massenstrom errechnet die Auswerteeinheit, insbesondere deren Recheneinheit, welche ein Bestandteil der Auswerteeinheit ist, vorteilhaft als Produkt aus dem zuvor berechneten/ermittelten Volumenstrom und einer Fluiddichte. Der erhaltene aktuelle Durchflusswert, welcher auch als IST-Durchflusswert (IST-WERT) bezeichnet werden kann, wird dann vorteilhaft in einem Vergleichsverfahren einem SOLL-Durchflusswert (SOLL-WERT), insbesondere einem minimalen SOLL-Durchflusswert und einem maximalen SOLL-Durchflusswert gegenübergestellt. Hierzu weist die Auswerteeinheit beispielsweise eine Vergleichseinheit auf, welche ein Bestandteil der Auswerteeinheit, insbesondere ein Bestandteil der Recheneinheit ist. Ist der IST-Durchflusswert größer oder gleich des minimalen SOLL-Durchflusswertes und kleiner oder gleich des maximalen SOLL-Durchflusswertes erfolgt keine Regelung des Prozesses, insbesondere keine Regelung der Hochdruckpumpe. Ist der IST-Durchflusswert jedoch kleiner als der minimale SOLL-Durchflusswert oder größer als der maximale SOLL-Durchflusswert, ist eine Regelung des Prozesses erforderlich. Die Auswerteeinheit bestimmt hierzu den Abweichungsgrad, insbesondere die Durchflussregelgröße bzw. den Durchflussregelwert des IST-Durchflusswertes zum minimalen oder maximalen Soll-Durchflusswert, vorzugsweise über eine Gleichung. Dazu dient wiederum die Recheneinheit, insbesondere eine Abweichungsermittlungseinheit der Auswerteeinheit. Der Abweichungsgrad, insbesondere die Durchflussregelgröße bzw. der Durchflussregelwert gibt an, wieviel zusätzliches Fluid in den Reaktor eingebracht werden muss oder wieviel weniger Fluid in den Reaktor eingebracht werden muss. Über diese Durchflussregelgröße wird daher bestimmt, ob die Durchflussgeschwindigkeit der Hochdruckpumpe erhöht oder verringert werden muss. Die Hochdruckpumpe wird dann entweder manuell (durch einen Bediener), halbautomatisch, vorteilhaft (voll)automatisch durch Stellglieder angesteuert, um entsprechend des Ergebnisses der Durchflussregelgröße die Hochdruckpumpe zu regeln und zu steuern. Hierfür ist die Auswerteeinheit vorteilhaft mit dem wenigstens einem Stellglied an der Hochdruckpumpe kabelgebunden oder kabellos datenübertragungstechnisch verbunden. Der Prozess des Messens, Rechnens und Steuerns/Regelns ist ein dynamischer Prozess, der folglich kontinuierlich während des Betriebes der Hochdruckanlage ausgeführt wird, sodass auch die Hochdruckpumpe vorteilhaft bedarfsgerecht kontinuierlich geregelt werden kann.

In einer weiteren Ausführungsform wird die mittels des Ultraschallmessgerätes gemessene Durchflussgeschwindigkeit unter Berücksichtigung weiterer vorliegender oder ermittelter Informationsdaten wie beispielsweise einer Temperatur des Fluidstromes und/oder einem Druck des Fluidstromes korrigiert, wobei die dazu notwendigen mathematischen Zusammenhänge und gegebenenfalls notwendigen Faktoren theoretisch bestimmt oder empirisch ermittelt werden. Dienlich können hierbei beispielsweise weitere vorteilhaft an der Messstrecke angeordnete Sensoren, wie Temperatursensoren und/oder Drucksensoren etc. sein. Diese Sensoren sind vorteilhaft ebenfalls mit der Auswerteeinheit verbunden, um dieser die ermittelten Daten zu übertragen.

Als weiterer Aspekt der Erfindung ist eine Hochdruckanlage beansprucht, welche eine Hochdruckpumpe mit einem Hochdruckpumpeneinlass und einem hochdruckseitigen Hochdruckpumpenauslass aufweist. Wenigstens ein Ultraschallmessgerät, insbesondere ein von außen angeordnetes Ultraschallmessgerätes, ist an dem hochdruckseitigen Hochdruckpumpenauslass zur Messung einer Durchflussgeschwindigkeit eines durch ein Rohr des hochdruckseitigen Hochdruckpumpenauslasses strömenden Fluidstromes angeordnet. Insbesondere ist das wenigsten eine Ultraschallmessgerät außenseitig auf dem Rohr (Hochruckrohr) des hochdruckseitigen Hochdruckpumpenauslasses angeordnet. Besonders vorteilhaft ist das wenigstens eine Ultraschallmessgerät innerhalb einer Messstrecke auf dem Rohr (Hochdruckrohr) des hochdruckseitigen Hochdruckpumpenauslasses angeordnet. Das Rohr (Hochruckrohr) kann ein Bestandteil des hochdruckseitigen Hochdruckpumpenauslasses sein oder mit diesem verbunden, insbesondere wirkverbunden sein. Vorteilhaft ist es dadurch möglich den die Hochdruckpumpe verlassenden und folglich den in den Reaktor einströmenden Volumenstrom oder auch Massenstrom des strömenden Fluides zu ermitteln, um diesen, insbesondere die Durchflussgeschwindigkeit des durch den Hochdruckpumpenauslass strömenden Fluides zu regeln. Die Hochdruckanlage ist dabei erfindungsgemäß eine Hochdruckanlage, wie oben aufgeführt, zur Polymerisation von Ethylen und Propylen oder Ethylen und Comonomeren, oder eine Wasserstrahlschneidanlage oder auch eine Hochdruck- Pastorisierungsanlage.

Erfindungsgemäß weist der hochdruckseitigen Hochdruckpumpenauslass ein dickwandiges Rohr mit einem Verhältnis des Rohrinnendurchmessers zu dem Rohraußendurchmesser von 1:1,5 bis 1:5 auf, wobei das Ultraschallmessgerät außenseitig an diesem dickwandigen Rohr angeordnet ist. Dieses dickwandige Rohr ist insbesondere für die Anwendung in Hochdruckanlagen konzipiert und weist einen verhältnismäßig kleinen Rohrinnendurchmesser zu dem verhältnismäßig großen Rohraußendurchmesser auf, sodass dessen Wandstärke weitaus dicker/größer ist als bei handelsüblichen Rohren in konventionellen Anlagen. Dieses Rohr kann an der Innen- und/ oder Außenoberfläche besonders sorgfältig bearbeitet sein, so dass eine sehr feine Oberfläche erhalten wird und/oder die Geometrie besonders eng toleriert ist.

Es ist denkbar, dass die Anlage eine Reaktorkammer (Reaktor) zur Ausführung einer chemischen, thermischen, thermodynamischen oder mechanischen Reaktion aufweist und das dickwandige Rohr unmittelbar oder mittelbar zwischen der Reaktorkammer und der Hochdruckpumpe angeordnet ist. Das bedeutet, dass das dickwandige Rohr entweder direkt (unmittelbar) ohne Zwischenschaltung eines anderen Elementes oder Bauteils oder indirekt (mittelbar), also über ein Zwischenelement oder Zwischenbauteil mit der Hochdruckpumpe verbunden bzw. an dieser angeordnet ist. Das dickwandige Rohr kann an dem hochdruckseitigen Hochdruckpumpenauslass angeordnet sein oder ein Bestandteil des hochdruckseitigen Hochdruckpumpenauslasses sein.

Gemäß einer Ausführungsform der Erfindung ist die Hochdruckanlage eine Anlage zur Polymerisation von Monomeren, insbesondere von Ethen (Ethylen) und Propen (Propylen).

Gemäß einer weiteren Ausführungsform weist das dickwandige Rohr ein Material aus der Gruppe der Metalllegierungen, wie hochlegierte oder niedriglegierte Stähle, Titanlegierungen, Kupferlegierungen, Nickellegierungen, Tantallegierungen, Chromlegierungen oder Kobaltlegierungen auf. Das dickwandige Rohr ist damit vorteilhaft resistent gegenüber korrosiven Medien und hochdruckbeständig. Eine Deformierung des dickwandigen Rohres wird aufgrund der verwendeten Materialien weitgehend vermieden, vorteilhaft verhindert. Es ist auch denkbar, dass das dickwandige Rohr eine Mischung der oben genannten Metalllegierungen aufweist. Zudem ist das dickwandige Rohr nicht auf diese Metalllegierungen begrenzt.

Es ist des Weiteren denkbar, dass das dickwandige Rohr (Hochdruckrohr) mittels eines Flansches an der Hochdruckpumpe fixiert ist, welcher Flansch einen Durchflusskanal mit einem sich - in Strömungsrichtung - zumindest abschnittsweise kontinuierlich konisch vergrößernden Abschnitt aufweist, wobei dieser konische Abschnitt sich zumindest über ein Drittel, insbesondere über die Hälfte der gesamten Länge des Durchflusskanals erstreckt. Durch die zuvor beschriebene Geometrie des Durchflusskanals des Flansches wird vorteilhaft ein weicher Übergang von dem hochdruckseitigen Hochdruckpumpenauslass zu dem dickwandigen Rohr ermöglicht. Dies ermöglicht vorteilhaft optimierte Strömungsverhältnisse des von der Hochdruckpumpe kommenden, durch den Flansch und das dickwandige Rohr strömenden Fluides.

Gemäß einer weiteren Ausführungsform weist der Innendurchmesser des dickwandigen Rohrs einen sich zumindest abschnittsweise kontinuierlich vergrößernden Abschnitt, einen zylindrischen Abschnitt und einen sich zumindest abschnittsweise kontinuierlich verjüngenden Abschnitt aufweist. Vorteilhaft sind alle drei Abschnitte derart nacheinander angeordnet, dass in Strömungsrichtung zuerst der sich zumindest abschnittsweise kontinuierlich vergrößernden Abschnitt, dann der zylindrische Abschnitt und nachfolgend der sich zumindest abschnittsweise kontinuierlich verjüngende Abschnitt ausgebildet sind. Vorteilhaft münden die Abschnitte derart ineinander, dass der erste Abschnitt in den nächsten (zweiten) Abschnitt und der nächste (zweite) Abschnitt in den nachfolgenden (dritte) Abschnitt mündet. Vorteilhaft werden hierdurch die Strömungsverhältnisse des durchströmenden Fluidstromes derart vergleichmäßigt, dass eine im Wesentlichen gleichmäßige, zumeist turbulente Fluidströmung entsteht. Vorteilhaft ist hierdurch das Messsignal insgesamt konstanter und rauschärmer.

Gemäß einer weiteren Ausführungsform sind in Strömungsrichtung vor dem Ultraschallmessgerät eine gerade, insbesondere krümmungsfreie Beruhigungsstrecke mit einer Länge, welche mindestens dem fünffachen des Innendurchmessers (Rohrinnendurchmessers) des dickwandigen Rohres entspricht, und in Strömungsrichtung nach dem Ultraschallmessgerät eine gerade, insbesondere krümmungsfreie Beruhigungsstrecke mit einer Länge, welche mindestens dem dreifachen des Innendurchmessers (Rohrinnendurchmessers) des dickwandigen Rohres entspricht, ausgebildet. Die Beruhigungstrecken sind vorteilhaft Rohrstücke, insbesondere geradlinig ausgebildete Rohrstücke bzw. Rohre. Diese Rohre (Beruhigungsrohre/Beruhigungsrohrstücke) sind vorteilhaft vor und nach dem dickwandigen Rohr (Hochdruckrohr) des hochdruckseitigen Hochdruckpumpenauslasses angeordnet und mit diesem verbunden/wirkverbunden. Alternativ sind die Beruhigungsstrecken Abschnitte des dickwandigen Rohres (Hochdruckrohres) des hochdruckseitigen Hochdruckpumpenauslasses. Vorteilhaft sind dann die Beruhigungsstrecken vor und nach der Messstrecke, die ebenfalls ein Abschnitt des dickwandigen Rohres ist, ausgebildet. Die Beruhigungsstrecken (als eigenständige Rohrstücke oder als Abschnitte eines gemeinsamen dickwandigen Hochdruckrohres) können dabei jeweils einen gleichmäßig verlaufenden Innendurchmesser oder auch sich in Strömungsrichtung betrachtet verjüngende oder sich erweiternde Innendurchmesser aufweisen. Auch ist es denkbar, dass die eine Beruhigungsstrecke einen kleineren/größeren Innendurchmesser aufweist, als die andere Beruhigungstrecke. Die Beruhigungsstrecken dienen vornehmlich dazu den Fluidstrom zu vergleichmäßigen und eine prozesssichere und genaue Messung zu ermöglichen.

Es ist des Weiteren möglich, dass der Fluidstrom aus einem Fluid aufweisend einen chemischen Initiator, insbesondere Peroxid, oder ein Comonomer, insbesondere Vinyl Acetat, Methyl-Acetat oder Butyl-Acetat, oder eine andere Flüssigkeit besteht. Diese Aufzählung ist jedoch nicht abschließend zu betrachten. Auch andere Fluide können hier Bestandteil des Fluidstromes sein.

Die Erfindung sieht vor, dass die Hochdruckpumpe zur Erzeugung eines Druckes zwischen 1000 bis 6000bar ausgelegt ist. Dadurch werden vorteilhaft eine Vielzahl an Anwendungsfelder in Hochdruckanlagen realisierbar.

Gemäß einer weiteren Ausführungsform ist das Ultraschallmessgerät mit einer Auswerteeinheit signalübertragungstechnisch bzw. datenübertragungstechnisch verbunden, um das Messergebnis der Durchflussgeschwindigkeit des Fluidstromes an die Auswerteeinheit zu übertragen. Die Übertragung von Daten und Signalen kann dabei kabellos oder kabelgebunden stattfinden. Die Auswerteeinheit selbst weist eine Vielzahl von weiteren Einheiten, wie eine Anzeigeeinheit zur Anzeige der ermittelten/gemessenen, berechneten und gesteuerten/geregelten Daten und/oder eine etwaige Eingabeeinheit zur Eingabe oder zur Änderungen von Daten und Parametern auf. Auch eine Recheneinheit, eine Abweichungsermittlungseinheit und/oder eine Vergleichseinheit sind denkbare Einheiten, wobei die Recheneinheit zu ermittelnde Durchflusswerte aus Messergebnisses berechnet, die Vergleichseinheit die berechneten Werte mit SOLL-Vorgaben vergleicht und die Abweichungsermittlungseinheit das Ergebnis in Bezug auf die Soll-Vorgaben auswertet (Abweichungen/Abweichungsgrad/Durchflussregelgröße ermittelt). Auch Sende- und Empfangseinheiten zur Übermittelung von Daten sind hilfreich und sind vorteilhaft ein Bestandteil der Auswerteeinheit. Vorteilhaft kann mit der Auswerteeinheit ein vorzugsweise (voll)automatisches Erfassen und Berechnen von Daten sowie eine (voll)automatische Steuerung der Hochdruckpumpe hinsichtlich zumindest deren Parameter der Durchflussgeschwindigkeit dynamisch erfolgen.

Demzufolge weist die Hochdruckanlage auch vorteilhaft Steuer- und Regeleinrichtungen auf, welche dazu dienen den Volumenstrom / Massenstrom des Fluides bedarfsgerecht zu steuern bzw. zu regeln. Diese Steuer- und Regeleinrichtungen sind vorteilhaft - in Strömungsrichtung betrachtet - vor dem Ultraschallmessgerät, insbesondere vor der Beruhigungsstrecke angeordnet.

Bei der beschriebenen Hochdruckanlage ergeben sich sämtliche Vorteile, die bereits zu einem Verfahren zur Ermittlung eine Durchflussregelgröße gemäß dem ersten Aspekt der Erfindung beschrieben worden sind.

Als weiterer Aspekt der Erfindung ist eine Verwendung eines Ultraschallmessgerätes zur Ermittlung eines (aktuellen/momentanen) Durchflusswertes eines durch ein dickwandiges Rohr eines hochdruckseitigen Hochdruckpumpenauslasses einer Hochdruckpumpe einer Hochdruckanlage gemäß dem weiter oben beschriebenen zweiten Aspekt der Erfindung strömenden Fluidstromes beansprucht. Dabei ist das Ultraschallmessgerät außenseitig auf dem dickwandigen Rohr des Hochdruckpumpenauslasses, welches Rohr ein Verhältnis des Innendurchmessers (Rohrinnendurchmesser) zum Außendurchmessers (Rohraußendurchmesser) von 1:1,5 bis 1:5 aufweist, angeordnet. Dieses Ultraschallmessgerät misst dabei die (aktuelle) Durchflussgeschwindigkeit des Fluidstromes dynamisch und diese gemessene Durchflussgeschwindigkeit wird dann als Messergebnis an einer Auswerteeinheit zur Berechnung eines aktuellen Durchflusswertes sowie einer Durchflussregelgröße bzw. eines Durchflussregelwertes aus dem Messergebnis übertragen (ebenfalls dynamisch).

Bei der beschriebenen Verwendung ergeben sich sämtliche Vorteile, die bereits zu einem Verfahren zur Ermittlung einer Durchflussregelgröße gemäß dem ersten Aspekt der Erfindung sowie zu der Hochdruckanlage gemäß dem zweiten Aspekt der Erfindung beschrieben worden sind.

Eine erfindungsgemäße Verwendung eines Ultraschallmessgerätes zur Ermittlung eines (aktuellen/momentanen) Durchflusswertes eines durch ein dickwandiges Rohr eines hochdruckseitigen Hochdruckpumpenauslasses einer Hochdruckpumpe strömenden Fluidstromes, sowie eine Ausführungsform einer Auswerteeinheit und einer Hochdruckanlage werden nachfolgend anhand von Zeichnungen näher erläutert. Es zeigen jeweils schematisch:
- Figur 1A: in einer perspektivischen Ansicht ein Ausschnitt eines dickwandigen Rohres mit daran angeordneten Ultraschallmessgeräten in Reihenschaltung,
- Figur 1B: in einer perspektivischen Ansicht ein Ausschnitt eines dickwandigen Rohres mit daran angeordneten Ultraschallmessgeräten in Parallelschaltung,
- Figur 2: in einer schematischen Darstellung eine Ausführungsform einer Auswerteeinheit,
- Figur 3: in einer Schnittdarstellung eine Ausführungsform eines dickwandigen Rohres mit Flansch zur Anordnung an einem hochdruckseitigen Hochdruckpumpenauslass, und
- Figur 4: ein Schaltbild einer Ausführungsform einer Hochdruckanlage.

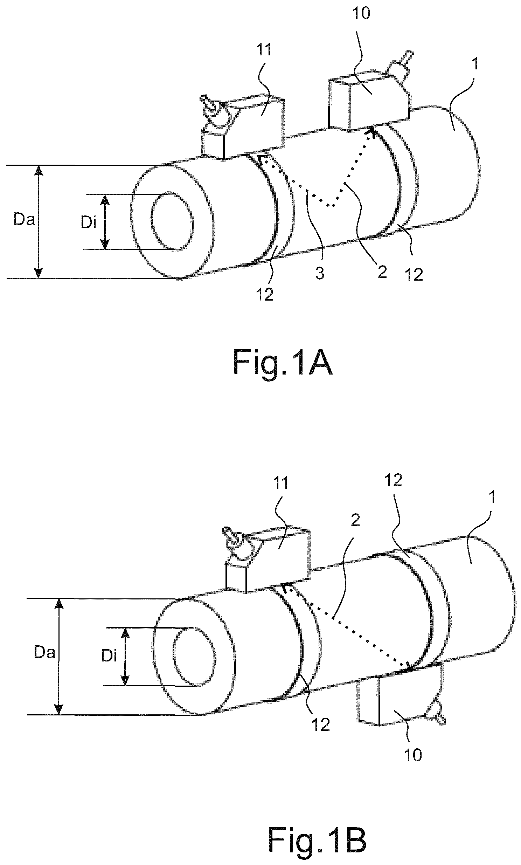

Elemente mit gleicher Funktion und Wirkungsweise sind in den Fig. 1 bis 4 jeweils mit denselben Bezugszeichen versehen.

In den Figuren 1A und 1B sind jeweils schematisch in einer perspektivischen Ansicht ein Ausschnitt eines dickwandigen Rohres 1 mit daran angeordneten Ultraschallmessgeräten 10, 11 gezeigt. In der in der Figur 1A gezeigten Ausführungsform sind die Ultraschallmessgeräte 10, 11 in Reihenschaltung angeordnet. Das bedeutet, dass beide Ultraschallmessgeräte 10, 11 auf der gleichen Seite des Rohres 1 befestigt sind. Diese Anordnung der Ultraschallmessgeräte 10, 11 eignet sich insbesondere für die Verwendung eines Reflexmodus und zur Erzeugung von einer geraden Anzahl an Schallwegen 2, 3. Wie in der Figur 1A schematisch gezeigt, werden zwei Schallwege 2, 3 (gepunktete Linie), nämlich ein erster Schallweg 2 zwischen dem einen (ersten) Ultraschallmessgerät 10 und der Innenwandung des Rohres 1 und ein dazugehöriger, insbesondere mit dem ersten Schallweg 2 verbundener (zweiter) Schallweg 3 zwischen der Innenwandung des Rohres 1 und dem weiteren (zweiten) Ultraschallmessgerät 11, erzeugt. Da auch das weitere Ultraschallmessgerät 11 Signale, insbesondere Ultraschallwellen, aussendet, werden folglich von diesem ebenfalls die zwei Schallwege 2, 3 verwendet, wobei folglich jedoch die Signale/Schallwellen den ersten Signalen, Schallwellen, entgegenlaufen. In der Ausführungsform gemäß der Figur 1B sind die Ultraschallmessgeräte 10, 11 im Wesentlichen in Parallelschaltung angeordnet. Das bedeutet, dass die Ultraschallmessgeräte 10, 11 an gegenüberliegenden Seiten des Rohres 1 angeordnet sind. Dabei weisen die Ultraschallmessgeräte 10, 11 in Strömungsrichtung betrachtet einen zueinander versetzten Abstand auf, liegen folglich nicht direkt übereinandern. Vielmehr sind die Ultraschallmessgeräte 10, 11 in Strömungsrichtung betrachtet zueinander beabstandet angeordnet. Diese Anordnung der Ultraschallmessgeräte 10, 11 eignet sich vorteilhaft für die Verwendung des Durchstrahlungsmodus, bei welchem eine ungerade Anzahl an Schallwegen 2 erzeugt wird. Wie in der Figur 1B ersichtlich ist ein Schallweg 2 zwischen dem einen (ersten) Ultraschallmessgerät 10 und dem anderen (zweiten) Ultraschallmessgerät 11 erzeugt. Die von den Ultraschallmessgeräten 10, 11 ausgehenden Schallwellen werden daher nicht an der Innenoberfläche des Rohres 1 reflektiert, sondern durchdringen das Rohr 1 von einer Seite zur anderen Seite.

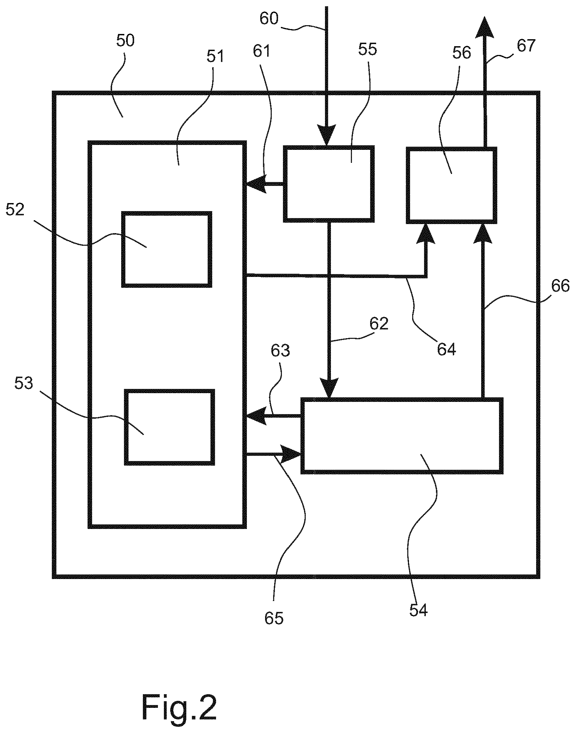

Wie in den Figuren 1A und 1B gezeigt, sind die Ultraschallmessgeräte 10, 11 außen/außenseitig auf dem dickwandigen Rohr 1 angeordnet und jeweils mittels eines Befestigungselementes 12, hier beispielsweise als Befestigungsgurt ausgeführt, fixiert. Das dickwandige Rohr 1 weist einen Innendurchmesser Di und einen Außendurchmesser Da auf. Beide Ultraschallmessgeräte 10, 11 messen dynamisch die Durchflussgeschwindigkeit des strömenden Fluides und übermitteln die Messergebnisse kontinuierlich an eine Auswerteeinheit 50, wie in der Figur 2 schematisch dargestellt.

Die in der Figur 2 schematisch dargestellte Auswerteeinheit 50 weist vorteilhaft eine Vielzahl an Einheiten auf. Mittels der Empfangseinheit 55 empfängt die Auswerteeinheit 50 folglich die von den Ultraschallmessgeräten 10, 11 gesandten Messwerte (Pfeil 60) hinsichtlich der Durchflussgeschwindigkeit bzw. Strömungsgeschwindigkeit des durch das dickwandige Rohr 1 (vgl. Figur 1) strömenden Fluides. Die empfangenen Daten/Werte werden dann entweder unmittelbar, also direkt an eine Recheneinheit 51 weitergegeben (Pfeil 61) oder mittelbar, also indirekt erst zu einer Speichereinheit 54 (Pfeil 62) und dann über diese Speichereinheit 54, welche unter anderem zur Zwischenspeicherung der Daten dient, an die Recheneinheit 51 übertragen (Pfeil 63). Die Recheneinheit 51 ermittelt aus den aktuell zugesandten Daten einen aktuellen Durchflusswert, wie einen Volumenstrom und/oder einen Massenstrom. Dieser ermittelte aktuelle Durchflusswert wird dann an die Vergleichseinheit 52, welche ein Bestandteil der Recheneinheit 51 sein kann, weitergegeben. Die Vergleichseinheit 52 vergleicht den erhaltenen Durchflusswert mit vorgegebenen minimalen SOLL-Durchflusswerten und maximalen SOLL-Durchflusswerten. Das Ergebnis wird dann einer Abweichungsermittlungseinheit 53 übertragen, welche ebenfalls vorteilhaft ein Bestandteil der Recheneinheit 51 ist. Die Abweichungsermittlungseinheit 53 ermittelt die Stellgröße, insbesondere die Durchflussregelgröße, bzw. den Durchflussregelwert, die/den es bedarf, um die Hochdruckpumpe derart zu regeln, dass die gemessene Durchflussgeschwindigkeit und der daraus zu ermittelnde Durchflusswert innerhalb vorgegebener Grenzwerte liegen. Diese Werte/Daten werden dann entweder direkt (unmittelbar) in Form von Befehlsdaten an eine Sendeeinheit 56 (Pfeil 64) übertragen oder mittelbar (indirekt) über die bereits benannte Speichereinheit 54 (Pfeil 65 und Pfeil 66). Die Sendeeinheit 56 sendet die Daten bzw. Stellgrößen, insbesondere die Durchflussregelgröße, bzw. den Durchflussregelwert dann an hier nicht gezeigte Stellglieder (Regel- und Steuereinrichtungen) der Hochdruckpumpe weiter (Pfeil 67). Diese Stellglieder sorgen dann für eine bedarfsgesteuerte Regelung der Hochdruckpumpe.

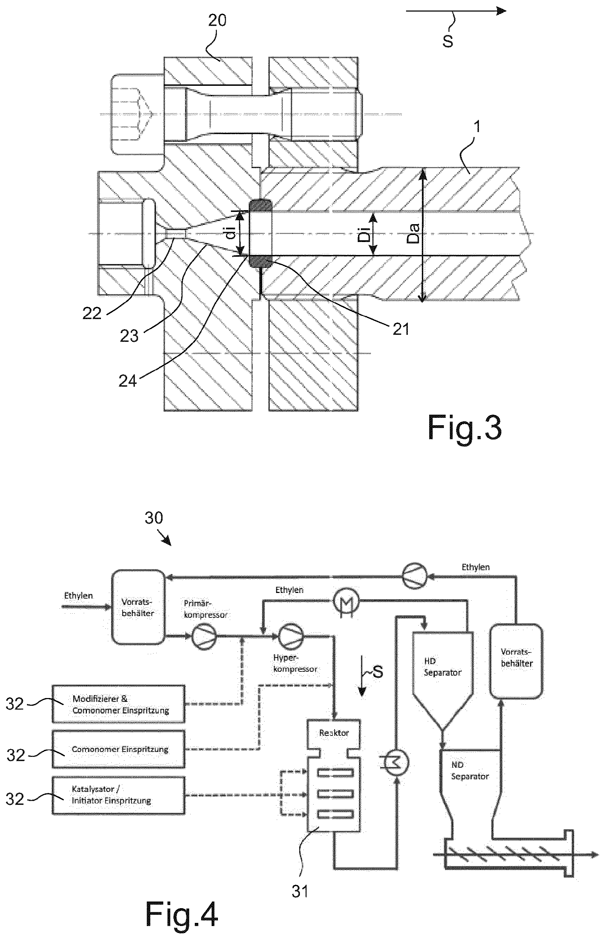

In der Figur 3 ist in einer Schnittdarstellung eine Ausführungsform eines dickwandigen Rohres 1 mit Flansch 20 zur Anordnung an einem hochdruckseitigen Hochdruckpumpenauslass (hier nicht gezeigt) dargestellt. Das dickwandige Rohr 1 wurde mit geeigneten Dichtungselementen 21 leckagedicht an dem Flansch 20 angeordnet und weist einen Innendurchmesser Di sowie einen Außendurchmesser Da auf. Der Flansch 20 weist einen Durchflusskanal 22 auf, welcher sich ausgehend von dem hier nicht gezeigten hochdruckseitigen Hochdruckpumpenauslass bis zum dickwandigen Rohr 1 erstreckt. Der Durchflusskanal 22 weist einen konischen, insbesondere einen sich in Strömungsrichtung S kontinuierlich konisch vergrößernden Abschnitt 23 auf. Das distale Ende 24 des Durchflusskanals 22, welcher zum dickwandigen Rohr 1 ausgerichtet ist, weist vorteilhaft einen Innendurchmesser di auf, welcher wenigstens zwei Drittel des Innendurchmessers Di bzw. des Rohrinnendurchmessers Di des dickwandigen Rohres 1 entspricht. Vorteilhaft ist der Innendurchmesser di des Durchflusskanals 22 genauso groß, wie der Innendurchmesser Di des dickwandigen Rohres 1.

In der Figur 4 ist schematisch ein Schaltbild einer Hochdruckanlage 30 gezeigt. Hierbei handelt es sich vornehmlich um eine Hochdruckanlage zur Herstellung der Ethylen-Copolymeren im Reaktor 31, welcher vorteilhaft als Rührreaktor ausgebildet sein kann. Alternativ ist es denkbar, dass die in der Figur 4 gezeigte Hochdruckanlage 30 einen Rohrreaktor aufweist. Ethylen und / oder Propylen wird bzw. werden über die Kompressoren (Primary Compressor, Hyper Compressor) komprimiert und in den Reaktor 31 gepumpt. Dabei ergibt sich die Strömungsrichtung S. Vor dem Reaktor 31, also entgegen der Strömungsrichtung S betrachtet, sind die möglichen Hochdruckpumpen 32 angeordnet, welche insbesondere über deren hochdruckseitigen Hochdruckpumpenauslass mit dem Reaktor 31 verbunden sind. Diese Hochdruckpumpen 32 werden vorteilhaft zum Einpumpen von Initiatoren (teils auch als Katalysatoren bezeichnet, Peroxiden), Modifizierern und/ oder Comonomeren eingesetzt. Darüber hinaus werden die Hochdruckpumpen 32 vorteilhaft als Regelorgane, (Regel- und Steuereinrichtungen) in der Hochdruckanlage 30 eingesetzt, da die Menge an eingepumpten Fluid den Polymerisationsprozess beeinflusst, teils auch erst initiiert. Durch eine präzise Dosierung der Fluide zum Hochdruckmedium werden u. a. die Temperatur und der Polymerisationsgrad reguliert und damit die Qualität des produzierten Kunststoffs entscheidend beeinflusst.

### Bezugszeichenliste

- 1: dickwandige Rohr
- 2: (erster) Schallweg
- 3: (zweiter) Schallweg

- 10, 11: Ultraschallmessgerät

- 20: Flansch
- 21: Dichtungselement
- 22: Durchflusskanal
- 23: kontinuierlich konisch vergrößernder Abschnitt
- 24: distales Ende

- 30: Hochdruckanlage
- 31a, b: Reaktor/Reaktorkammer
- 32: Hochdruckpumpe

- 50: Auswerteeinheit
- 51: Recheneinheit
- 52: Vergleichseinheit
- 53: Abweichungsermittlungseinheit
- 54: Speichereinheit
- 55: Empfangseinheit
- 56: Sendeeinheit

- 60: Eingang der Messwerte
- 61: Übertrag der Messwerte an Recheneinheit
- 62: Übertrag der Messwerte an Speichereinheit
- 63: Übertrag der Messwerte an Recheneinheit
- 64: Übertrag der Befehlsdaten an Sendeeinheit
- 65: Übertrag der Befehlsdaten an Speichereinheit
- 66: Übertrag der Befehlsdaten an Sendeeinheit
- 67: Senden der Befehlsdaten an Stellglieder
- Da: Außendurchmesser dickwandiges Rohr/Rohraußendurchmesser
- Di: Innendurchmesser dickwandiges Rohr/Rohrinnendurchmesser
- di: Innendurchmesser Durchflusskanal

- S: Strömungsrichtung

## Patentansprüche

1. Hochdruckanlage (30) aufweisend eine Hochdruckpumpe (32), wobei die Hochdruckpumpe (32) zur Erzeugung eines Druckes zwischen 1000 bis 6000bar ausgelegt ist, mit einem Hochdruckpumpeneinlass und einem hochdruckseitigen Hochdruckpumpenauslass, wobei wenigstens ein Ultraschallmessgerät (10, 11) außenseitig an dem hochdruckseitigen Hochdruckpumpenauslass zur Messung einer Durchflussgeschwindigkeit eines durch ein Rohr (1) des hochdruckseitigen Hochdruckpumpenauslasses strömenden Fluidstromes angeordnet ist, **dadurch gekennzeichnet, dass** die Hochdruckanlage eine Hochdruckanlage zur Polymerisation, eine Hochdruckanlage zur Erstellung von Copolymeren, eine Wasserstrahl-Schneidanlage oder eine Hochdruck-Pastorisierungsanlage ist, und dass der hochdruckseitige Hochdruckpumpenauslass ein dickwandiges Rohr (1) mit einem Verhältnis des Rohrinnendurchmessers (Di) zu dem Rohraußendurchmesser (Da) von 1:1,5 bis 1:5 aufweist und das Ultraschallmessgerät (10, 11) an diesem dickwandigen Rohr (1) angeordnet ist.

2. Hochdruckanlage nach Anspruch 1,
**dadurch gekennzeichnet, dass**
die Hochdruckanlage (30) eine Reaktorkammer (31) zur Ausführung einer chemischen, thermischen, thermodynamischen oder mechanischen Reaktion aufweist und das dickwandige Rohr (1) unmittelbar oder mittelbar zwischen der Reaktorkammer (31) und der Hochdruckpumpe (32) angeordnet ist.

3. Hochdruckanlage nach einem der Ansprüche 1 oder 2,
**dadurch gekennzeichnet, dass**
die Hochdruckanlage (30) eine Anlage zur Polymerisation von Monomeren, insbesondere von Ethen (Ethylen) und Propen (Propylen) ist.

4. Hochdruckanlage nach einem der Ansprüche 1 bis 3,
**dadurch gekennzeichnet, dass**
das dickwandige Rohr (1) ein Material aus der Gruppe der Metalllegierungen, wie hochlegierte oder niedriglegierte Stähle, Titanlegierungen, Kupferlegierungen, Nickellegierungen, Tantallegierungen, Chromlegierungen oder Kobaltlegierungen aufweist.

5. Hochdruckanlage nach einem der Ansprüche 1 bis 4,
**dadurch gekennzeichnet, dass**
das dickwandige Rohr (1) mittels eines Flansches (20) an der Hochdruckpumpe (32) fixiert ist, welcher Flansch (20) einen Durchflusskanal (22) mit einem sich - in Strömungsrichtung - zumindest abschnittsweise kontinuierlich konisch vergrößernden Abschnitt (23) aufweist, wobei dieser konische Abschnitt (23) sich zumindest über ein Drittel, insbesondere über die Hälfte der gesamten Länge des Durchflusskanals (22) erstreckt.

6. Hochdruckanlage nach einem der Ansprüche 1 bis 5,
**dadurch gekennzeichnet, dass**
der Innendurchmesser (Di) des dickwandigen Rohrs (1) einen sich zumindest abschnittsweise kontinuierlich vergrößernden Abschnitt, einen zylindrischen Abschnitt und einen sich zumindest abschnittsweise kontinuierlich verjüngenden Abschnitt aufweist.

7. Hochdruckanlage nach einem der Ansprüche 1 bis 6,
**dadurch gekennzeichnet, dass**
in Strömungsrichtung vor dem Ultraschallmessgerät (10, 11) eine gerade, insbesondere krümmungsfreie Beruhigungsstrecke mit einer Länge, welche mindestens dem fünffachen des Innendurchmessers des dickwandigen Rohres (1) entspricht, und in Strömungsrichtung nach dem Ultraschallmessgerät (10, 11) eine gerade, insbesondere krümmungsfreie Beruhigungsstrecke mit einer Länge, welche mindestens dem dreifachen des Innendurchmessers (Di) des dickwandigen Rohres (1) entspricht, ausgebildet sind.

8. Hochdruckanlage nach einem der Ansprüche 1 bis 7,
**dadurch gekennzeichnet, dass**
das Ultraschallmessgerät (10, 11) mit einer Auswerteeinheit (50) signalübertragungstechnisch verbunden ist, um das Messergebnis der Durchflussgeschwindigkeit des Fluidstromes an die Auswerteeinheit (50) zu übertragen.

9. Verfahren zur Ermittlung einer Durchflussregelgröße eines durch einen hochdruckseitigen Hochdruckpumpenauslass einer Hochdruckpumpe (32) strömenden Fluidstromes in einer Hochdruckanlage gemäß mindestens einem der vorhergehenden Ansprüche, aufweisend zumindest die folgenden Schritte:
- Messung der Durchflussgeschwindigkeit des durch ein Rohr (1) des hochdruckseitigen Hochdruckpumpenauslasses strömenden Fluidstromes mittels wenigstens einem Ultraschallmessgerät (10, 11), insbesondere eines von außen angeordneten Ultraschallmessgerätes (10, 11), zum Erhalt eines Messergebnisses der Durchflussgeschwindigkeit,
- Übertragung des Messergebnisses der Durchflussgeschwindigkeit an eine Auswerteeinheit (50), und
- Berechnung eines aktuellen Durchflusswertes sowie der Durchflussregelgröße aus dem Messergebnis der Durchflussgeschwindigkeit mittels der Auswerteeinheit (50).

10. Verfahren nach Anspruch 9,
**dadurch gekennzeichnet, dass**
die Messung der Durchflussgeschwindigkeit sowie die Übertragung des Messergebnisses und die Berechnung des aktuellen Durchflusswertes sowie der zu erzielenden Durchflussregelgröße dynamisch erfolgt.

11. Verfahren nach einem der vorangegangenen Ansprüche,
**dadurch gekennzeichnet, dass**
die Auswerteeinheit (50) den aktuellen Durchflusswert mittels eines Gleichungsverfahrens und/oder die Durchflussregelgröße mittels eines Vergleich-Verfahrens berechnet.

12. Verfahren nach einem der vorangegangenen Ansprüche,
**dadurch gekennzeichnet, dass**
die mittels des Ultraschallmessgerätes (10, 11) gemessene Durchflussgeschwindigkeit unter Berücksichtigung weiterer vorliegender oder ermittelter Informationsdaten wie beispielsweise einer Temperatur des Fluidstromes und/oder einem Druck des Fluidstromes korrigiert wird, wobei die dazu notwendigen mathematischen Zusammenhänge und gegebenenfalls notwendigen Faktoren theoretisch bestimmt oder empirisch ermittelt werden.

13. Verwendung eines Ultraschallmessgerätes (10, 11) zur Ermittlung eines Durchflusswertes eines durch ein dickwandiges Rohr (1) eines hochdruckseitigen Hochdruckpumpenauslasses einer Hochdruckpumpe einer Hochdruckanlage gemäß mindestens einem der Ansprüche 1 bis 8 strömenden Fluidstromes, wobei die Hochdruckpumpe (32) zur Erzeugung eines Druckes zwischen 1000 bis 6000bar ausgelegt ist, **dadurch gekennzeichnet, dass** das Ultraschallmessgerät (10, 11) derart außenseitig auf dem dickwandigen Rohr (1) des Hochdruckpumpenauslasses, welches Rohr (1) ein Verhältnis des Innendurchmessers (Di) zum Außendurchmessers (Da) von 1:1,5 bis 1:5 aufweist, angeordnet ist, dass dieses Ultraschallmessgerät (10, 11) die Durchflussgeschwindigkeit des Fluidstromes dynamisch misst und diese gemessene Durchflussgeschwindigkeit als Messergebnis an eine Auswerteeinheit (50) zur Berechnung eines aktuellen Durchflusswertes sowie einer zu erzielenden Durchflussregelgröße aus dem Messergebnis überträgt.

## Claims

1. High-pressure installation (30) comprising a high-pressure pump (32), wherein the high-pressure pump (32) is designed to generate a pressure between 1000 to 6000bar, with a high-pressure pump inlet and a high-pressure-side high-pressure pump outlet, wherein at least one ultrasonic measuring device (10, 11) is arranged externally on the high-pressure-side high-pressure pump outlet for measuring a flow velocity of a fluid flow flowing through a pipe (1) of the high-pressure-side high-pressure pump outlet, **characterized in that** the high-pressure installation is a high-pressure installation for polymerization, a high-pressure installation for the production of copolymers, a water jet cutting installation or a high-pressure pasteurization installation, and that the high-pressure-side high-pressure pump outlet has a thick-walled pipe (1) with a ratio of the pipe inner diameter (Di) to the pipe outer diameter (Da) of 1:1,5 to 1:5 and the ultrasonic measuring device (10, 11) is arranged on this thick-walled pipe (1).

2. High-pressure installation according to claim 1,
**characterized in that**
the high-pressure installation (30) has a reactor chamber (31) for carrying out a chemical, thermal, thermodynamic or mechanical reaction and the thick-walled pipe (1) is arranged directly or indirectly between the reactor chamber (31) and the high-pressure pump (32).

3. High-pressure installation according to one of claims 1 or 2,
**characterized in that**
the high-pressure installation (30) is an installation for polymerization of monomers, in particular of ethene (ethylene) and propene (propylene).

4. High-pressure installation according to one of claims 1 to 3,
**characterized in that**
the thick-walled pipe (1) has a material from the group of metal alloys, such as high-alloy or low-alloy steels, titanium alloys, copper alloys, nickel alloys, tantalum alloys, chromium alloys or cobalt alloys.

5. High-pressure installation according to one of claims 1 to 4,
**characterized in that**
the thick-walled pipe (1) is fixed to the high-pressure pump (32) by means of a flange (20), which flange (20) has a flow channel (22) with a section (23) that continuously widens conically at least in sections - in the flow direction -, wherein this conical section (23) extends at least over one third, in particular over half of the total length of the flow channel (22).

6. High-pressure installation according to one of claims 1 to 5,
**characterized in that**
the inner diameter (Di) of the thick-walled pipe (1) has a section that continuously widens at least in sections, a cylindrical section and a section that continuously narrows at least in sections.

7. High-pressure installation according to one of claims 1 to 6,
**characterized in that**
in the flow direction before the ultrasonic measuring device (10, 11) a straight, in particular curvature-free calming section with a length which corresponds to at least five times the inner diameter of the thick-walled pipe (1), and in the flow direction after the ultrasonic measuring device (10, 11) a straight, in particular curvature-free calming section with a length which corresponds to at least three times the inner diameter (Di) of the thick-walled pipe (1), are formed.

8. High-pressure installation according to one of claims 1 to 7,
**characterized in that**
the ultrasonic measuring device (10, 11) is connected to an evaluation unit (50) in terms of signal transmission in order to transmit the measurement result of the flow velocity of the fluid flow to the evaluation unit (50).

9. Method for determining a flow control variable of a fluid flow flowing through a high-pressure-side high-pressure pump outlet of a high-pressure pump (32) in a high-pressure installation according to at least one of the preceding claims, comprising at least the following steps:
- measurement of the flow velocity of the fluid flow flowing through a pipe (1) of the high-pressure-side high-pressure pump outlet by means of at least one ultrasonic measuring device (10, 11), in particular an ultrasonic measuring device (10, 11) arranged externally, to obtain a measurement result of the flow velocity,
- transmission of the measurement result of the flow velocity to an evaluation unit (50), and
- calculation of a current flow value as well as the flow control variable from the measurement result of the flow velocity by means of the evaluation unit (50).

10. Method according to claim 9,
**characterized in that**
the measurement of the flow velocity as well as the transmission of the measurement result and the calculation of the current flow value as well as the flow control variable to be achieved are carried out dynamically.

11. Method according to one of the preceding claims,
**characterized in that**
the evaluation unit (50) calculates the current flow value by means of an equation method and/or the flow control variable by means of a comparison method.

12. Method according to one of the preceding claims,
**characterized in that**
the flow velocity measured by means of the ultrasonic measuring device (10, 11) is corrected taking into account further available or determined information data such as, for example, a temperature of the fluid flow and/or a pressure of the fluid flow, wherein the mathematical relationships necessary for this and, if applicable, necessary factors are determined theoretically or determined empirically.

13. Use of an ultrasonic measuring device (10, 11) for determining a flow value of a fluid flow flowing through a thick-walled pipe (1) of a high-pressure-side high-pressure pump outlet of a high-pressure pump of a high-pressure installation according to at least one of claims 1 to 8, wherein the high-pressure pump (32) is designed to generate a pressure between 1000 to 6000bar, **characterized in that** the ultrasonic measuring device (10, 11) is arranged externally on the thick-walled pipe (1) of the high-pressure pump outlet, which pipe (1) has a ratio of the inner diameter (Di) to the outer diameter (Da) of 1:1,5 to 1:5, such that this ultrasonic measuring device (10, 11) dynamically measures the flow velocity of the fluid flow and transmits this measured flow velocity as a measurement result to an evaluation unit (50) for calculating a current flow value as well as a flow control variable to be achieved from the measurement result.

## Revendications

1. Installation haute pression (30) comprenant une pompe haute pression (32), la pompe haute pression (32) étant conçue pour générer une pression comprise entre 1000 à 6000bar, avec une entrée de pompe haute pression et une sortie de pompe haute pression côté haute pression, au moins un appareil de mesure à ultrasons (10, 11) étant disposé à l'extérieur sur la sortie de pompe haute pression côté haute pression pour mesurer une vitesse d'écoulement d'un flux de fluide s'écoulant à travers un tuyau (1) de la sortie de pompe haute pression côté haute pression, **caractérisée en ce que** l'installation haute pression est une installation haute pression pour la polymérisation, une installation haute pression pour la production de copolymères, une installation de découpe par jet d'eau ou une installation de pasteurisation haute pression, et **en ce que** la sortie de pompe haute pression côté haute pression présente un tuyau à paroi épaisse (1) avec un rapport du diamètre intérieur du tuyau (Di) au diamètre extérieur du tuyau (Da) de 1:1,5 à 1:5 et l'appareil de mesure à ultrasons (10, 11) est disposé sur ce tuyau à paroi épaisse (1).

2. Installation haute pression selon la revendication 1,
**caractérisée en ce que**
l'installation haute pression (30) présente une chambre de réacteur (31) pour effectuer une réaction chimique, thermique, thermodynamique ou mécanique et le tuyau à paroi épaisse (1) est disposé directement ou indirectement entre la chambre de réacteur (31) et la pompe haute pression (32).

3. Installation haute pression selon l'une des revendications 1 ou 2,
**caractérisée en ce que**
l'installation haute pression (30) est une installation pour la polymérisation de monomères, en particulier d'éthène (éthylène) et de propène (propylène).

4. Installation haute pression selon l'une des revendications 1 à 3,
**caractérisée en ce que**
le tuyau à paroi épaisse (1) présente un matériau du groupe des alliages métalliques, tels que des aciers fortement alliés ou faiblement alliés, des alliages de titane, des alliages de cuivre, des alliages de nickel, des alliages de tantale, des alliages de chrome ou des alliages de cobalt.

5. Installation haute pression selon l'une des revendications 1 à 4,
**caractérisée en ce que**
le tuyau à paroi épaisse (1) est fixé à la pompe haute pression (32) au moyen d'une bride (20), laquelle bride (20) présente un canal d'écoulement (22) avec une section (23) s'élargissant coniquement de manière continue au moins par sections - dans le sens d'écoulement -, cette section conique (23) s'étendant au moins sur un tiers, en particulier sur la moitié de la longueur totale du canal d'écoulement (22).

6. Installation haute pression selon l'une des revendications 1 à 5,
**caractérisée en ce que**
le diamètre intérieur (Di) du tuyau à paroi épaisse (1) présente une section s'élargissant de manière continue au moins par sections, une section cylindrique et une section se rétrécissant de manière continue au moins par sections.

7. Installation haute pression selon l'une des revendications 1 à 6,
**caractérisée en ce que**
dans le sens d'écoulement avant l'appareil de mesure à ultrasons (10, 11) une section de stabilisation droite, en particulier sans courbure, avec une longueur qui correspond au moins à cinq fois le diamètre intérieur du tuyau à paroi épaisse (1), et dans le sens d'écoulement après l'appareil de mesure à ultrasons (10, 11) une section de stabilisation droite, en particulier sans courbure, avec une longueur qui correspond au moins à trois fois le diamètre intérieur (Di) du tuyau à paroi épaisse (1), sont formées.

8. Installation haute pression selon l'une des revendications 1 à 7,
**caractérisée en ce que**
l'appareil de mesure à ultrasons (10, 11) est relié à une unité d'évaluation (50) en termes de transmission de signal afin de transmettre le résultat de mesure de la vitesse d'écoulement du flux de fluide à l'unité d'évaluation (50).

9. Procédé pour déterminer une variable de régulation de débit d'un flux de fluide s'écoulant à travers une sortie de pompe haute pression côté haute pression d'une pompe haute pression (32) dans une installation haute pression selon au moins l'une des revendications précédentes, comprenant au moins les étapes suivantes:
- mesure de la vitesse d'écoulement du flux de fluide s'écoulant à travers un tuyau (1) de la sortie de pompe haute pression côté haute pression au moyen d'au moins un appareil de mesure à ultrasons (10, 11), en particulier d'un appareil de mesure à ultrasons (10, 11) disposé à l'extérieur, pour obtenir un résultat de mesure de la vitesse d'écoulement,
- transmission du résultat de mesure de la vitesse d'écoulement à une unité d'évaluation (50), et
- calcul d'une valeur de débit actuelle ainsi que de la variable de régulation de débit à partir du résultat de mesure de la vitesse d'écoulement au moyen de l'unité d'évaluation (50).

10. Procédé selon la revendication 9,
**caractérisé en ce que**
la mesure de la vitesse d'écoulement ainsi que la transmission du résultat de mesure et le calcul de la valeur de débit actuelle ainsi que de la variable de régulation de débit à atteindre sont effectués de manière dynamique.

11. Procédé selon l'une des revendications précédentes,
**caractérisé en ce que**
l'unité d'évaluation (50) calcule la valeur de débit actuelle au moyen d'une méthode d'équation et/ou la variable de régulation de débit au moyen d'une méthode de comparaison.

12. Procédé selon l'une des revendications précédentes,
**caractérisé en ce que**
la vitesse d'écoulement mesurée au moyen de l'appareil de mesure à ultrasons (10, 11) est corrigée en tenant compte d'autres données d'information disponibles ou déterminées telles que, par exemple, une température du flux de fluide et/ou une pression du flux de fluide, les relations mathématiques nécessaires à cet effet et, le cas échéant, les facteurs nécessaires étant déterminés théoriquement ou déterminés empiriquement.

13. Utilisation d'un appareil de mesure à ultrasons (10, 11) pour déterminer une valeur de débit d'un flux de fluide s'écoulant à travers un tuyau à paroi épaisse (1) d'une sortie de pompe haute pression côté haute pression d'une pompe haute pression d'une installation haute pression selon au moins l'une des revendications 1 à 8, la pompe haute pression (32) étant conçue pour générer une pression comprise entre 1000 à 6000bar, **caractérisée en ce que** l'appareil de mesure à ultrasons (10, 11) est disposé à l'extérieur sur le tuyau à paroi épaisse (1) de la sortie de pompe haute pression, lequel tuyau (1) présente un rapport du diamètre intérieur (Di) au diamètre extérieur (Da) de 1:1,5 à 1:5, de sorte que cet appareil de mesure à ultrasons (10, 11) mesure dynamiquement la vitesse d'écoulement du flux de fluide et transmet cette vitesse d'écoulement mesurée en tant que résultat de mesure à une unité d'évaluation (50) pour calculer une valeur de débit actuelle ainsi qu'une variable de régulation de débit à atteindre à partir du résultat de mesure.
